# EUROPÄISCHE PATENTSCHRIFT

(11) **EP 1 239 208 B1**
(45) Veröffentlichungstag und Bekanntmachung des Hinweises auf die Patenterteilung: **14.12.2005**
(21) Anmeldenummer: 02004830.2
(22) Anmeldetag: 02.03.2002
(51) Int. Cl.: F16L 37/00, F15B 21/04, E02F 9/22, E02F 3/36

(54) **Elektro-hydraulischer Schaltungskreis zur Druckentlastung von Schnellkupplungen**
Electrohydraulic circuit for relieving the pressure of quick-connect couplings
Circuit électro-hydraulique pour laisser échapper la pression dans les raccords rapides

(30) Priorität: 10.03.2001 DE 10111632
(43) Veröffentlichungstag der Anmeldung: 11.09.2002
(73) Patentinhaber: DEERE & COMPANY, Moline, Illinois 61265-8098 (US)
(72) Erfinder: Clark, Dave, Dubuque, IA 52004 (US); Wiertellok, Markus, 66482 Zweibrücken (DE)
(74) Vertreter: Lau-Loskill, Philipp

(56) Entgegenhaltungen:
- WO-A-88/03198
- DE-A- 4 008 720
- DE-A- 4 210 790
- DE-A- 19 706 998

## Beschreibung

Die Erfindung betrifft einen elektro-hydraulischen Schaltungskreis zur Druckentlastung eines hydraulischen Schnellkupplungskreises gemäß dem Oberbegriff des Patentanspruchs 1, wie er beispielsweise aus der WO 8803198A1 bekannt ist.

Arbeitsmaschinen enthalten häufig Anbauschnittstellen, an denen Anbaugeräte lösbar montierbar sind. Bei den Anbaugeräten kann es sich um solche handeln, die hydraulische Arbeitsfunktionen ausführen und zu diesem Zweck beispielsweise Hydraulikzylinder oder Hydraulikmotoren aufweisen, die mit dem Hydraulikversorgungskreis des Arbeitsfahrzeugs verbunden werden. Um eine rasche Montage und Demontage der Anbaugeräte zu ermöglichen, werden als Hydraulikanschlüsse in der Regel hydraulische Schnellkupplungen verwendet. Die fahrzeugseitigen Schnellkupplungsteile stehen über Hydraulikleitungen mit einem elektromagnetisch betätigbaren Steuerventil in Verbindung, durch dessen Betätigung die einzelnen Schnellkupplungen wahlweise mit einem Druckkanal oder einem Rückflusskanal des Hydraulikversorgungskreises verbunden werden können, so dass sich die hydraulische Funktion des Anbaugeräts wunschgemäß ansteuern lässt.

Als hydraulisch betätigbare Anbaugeräte kommen beispielsweise Silageschneider mit hydraulischer Schneideinrichtung, Heugabeln, bei denen Heuballen zwischen hydraulisch betätigbaren Zangen einklemmbar sind, Entsorgungsschaufeln mit durch eine hydraulisch betätigbare Schaufel verschließbarer Kammer und hydraulisch angetriebene Bürsten in Betracht.

Die Schnellkupplungen dienen dem schnellen hydraulischen Verbinden und Lösen, so dass bei einem häufigen Wechsel der Anbaugeräte die Montagezeiten gering gehalten werden können. Allerdings lassen sich die Schnellkupplungen nur lösen, wenn sie nicht unter Druck stehen. Auch ein Zusammenstecken der Schnellkupplungsteile ist gegen die Kraft des Systemdrucks nicht möglich.

Vor dem Verbinden und Lösen der Schnellkupplungen werden daher die zu den Schnellkupplungen führenden Hydraulikleitungen druckentlastet. Hierfür werden in der Praxis Steuerventile verwendet, die mit den Hydraulikleitungen in Verbindung stehen und deren Ventilschieber sich manuell durch einen Bedienhebel betätigen lässt, um die Hydraulikleitungen für die Montage oder Demontage eines Anbaugerätes druckloszuschalten. Das Drucklosschalten erfolgt bei abgestelltem Fahrzeugmotor, wenn also die Hydraulikpumpe, die den Druck des Hydraulikversorgungskreises aufrechterhält, nicht läuft. Das Steuerventil wird hierbei aus seiner mittleren Sperrstellung zunächst in eine und dann in eine andere Durchflussstellung verschoben, um die beiden Schnellkupplungen nacheinander mit der Rücklaufleitung des Hydraulikversorgungskreises zu verbinden.

Das Hauptproblem bei dieser mechanischen Druckentlastungsmethode besteht darin, dass der Bedienhebel in der Nähe des Steuerventils angeordnet sein muss und daher im allgemeinen für die Bedienungsperson schwer zugänglich ist. Die durch das Steuerventil vorgegebene Lage des Bedienungshebels bietet für den Hebel im allgemeinen keinen hinreichenden Schutz vor Verschmutzungen und Beschädigungen während des Betriebs.

Die der Erfindung zugrunde liegende Aufgabe wird darin gesehen, einen hydraulisch-elektrischen Schaltungskreis der eingangs genannten Art anzugeben, durch welchen die vorgenannten Probleme überwunden werden. Insbesondere soll es möglich sein das Bedienungselement für das Steuerventil an einer frei wählbaren, gut zugänglichen Stelle des Arbeitsfahrzeugs zu montieren.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Der erfindungsgemäße elektro-hydraulische Schaltungskreis dient der Druckentlastung eines Schnellkupplungskreises mit wenigstens zwei hydraulischen Schnellkupplungen, durch welche hydraulische Komponenten eines Anbaugerätes mit dem Hydraulikversorgungskreis eines Arbeitsfahrzeugs lösbar verbunden werden. Jede Schnellkupplung lässt sich über Hydraulikleitungen unter Zwischenschaltung wenigstens eines elektromagnetisch ansteuerbaren Steuerventils wahlweise mit einem fahrzeugseitigen Druckkanal oder mit einem fahrzeugseitigen Rücklaufkanal verbinden. Wenigstens eine von Hand betätigbarer elektrischer Druckentlastungsschalter ist vorgesehen, der mit einer Spannungsquelle, beispielsweise der Fahrzeugbatterie, und dem Steuerventil derart in Verbindung steht, dass bei einer Schalterbetätigung das Steuerventil aus einer Sperrstellung in eine Durchflussstellung umschaltet. Bei dieser Umschaltung wird wenigstens eine der Schnellkupplungen mit dem im wesentlichen drucklosen Rücklaufkanal verbunden. Die Erfindung schlägt vor, das Steuerventil in einen elektrischen Steuerkreis zur betriebsmäßigen Steuerung des Zuflusses und Abflusses der Hydraulikflüssigkeit zu dem Anbaugerät einzubinden.

Der Schaltungskreis ist derart ausgelegt, dass das Steuerventil einerseits, wie beschrieben, dem Einfluss des Druckentlastungsschalters ausgesetzt ist und andererseits in einen elektrischen Steuerkreis eingebunden ist, welcher der betriebsmäßigen Steuerung des Zuflusses und Abflusses der Hydraulikflüssigkeit zu dem Anbaugerät dient. Die betriebsmäßige Steuerung des Arbeitsgerätes kann beispielsweise durch einen in der Fahrzeugkabine angeordneten Joystick erfolgen. Hierbei genügt ein Steuerventil das einerseits der üblichen Bedienung der Hydraulikkomponenten des Anbaugeräts dient und andererseits als Druckentlastungsventil Montage und Demontage des Anbaugeräts genutzt werden kann.

Die erfindungsgemäße Lösung eröffnet viele neue Wege, um das elektromagnetische Steuerventil zu aktivieren und die Druckentlastung der Schnellkupplungen vorzunehmen. Der oben beschriebene Bedienungshebel kann entfallen, so dass auch die mit diesem Hebel verbundenen Nachteile vermieden werden. Bei dem elektrischen Druckentlastungsschalter kann es sich um einen einfachen, kostengünstigen Schalter handeln, der sich nahezu an beliebiger Stelle des Fahrzeugs an einer gut zugänglichen Stelle, beispielsweise in der Nähe des Anbaugeräts oder in der Fahrzeugkabine, montieren lässt.

Es ist von besonderem Vorteil, als Druckentlastungsschalter einen federzentrierten Wippschalter zu verwenden, der aus einer Ruhestellung in wenigstens zwei unterschiedliche Wippstellungen auslenkbar ist, um wahlweise eine der Schnellkupplungen mit dem Rücklaufkanal zu verbinden. Jeder Auslenkstellung des Wippschalters ist eine Steuerstellung des Steuerventils zugeordnet. In jeder der Steuerstellungen wird eine der Schnellkupplungen an den Rücklaufkanal, der mit einem im wesentlichen drucklosen Vorratsbehälter verbunden ist, angeschlossen. Um die Druckentlastung von zwei Schnellkupplungen (Vorlauf und Rücklauf) vorzunehmen, wird der Kippschalter zunächst zu einer Seite gekippt, so dass das Steuerventil eine erste Schnellkupplung mit dem Rücklaufkanal verbindet, und dann zu der anderen Seite gekippt, um die zweite Schnellkupplung mit dem Rücklaufkanal zu verbinden.

Vorzugsweise wird (insbesondere in Verbindung mit einem Wippschalter) ein Steuerventil verwendet, welches zwischen wenigstens drei Stellungen bewegbar ist, wobei in einer ersten Stellung eine erste Schnellkupplung mit dem Rückflusskanal verbunden wird, in einer zweiten Stellung der Zufluss und der Abfluss der Schnellkupplungen gesperrt wird und in einer dritten Stellung eine zweite Schnellkupplung mit dem Rückflusskanal verbunden wird.

Gemäß einer bevorzugten Weiterbildung der Erfindung lässt sich der Druckentlastungsschalters hilfsweise auch zur hydraulischen Betätigung des Anbaugerätes nutzen, in dem der Schaltungskreis derart ausgebildet ist, dass in einer ersten Stellung des Steuerventils eine erste Schnellkupplung mit dem Rücklaufkanal und eine zweite Schnellkupplung mit dem Druckkanal verbunden wird und in einer weiteren Stellung des Steuerventils die erste Schnellkupplung dem Druckkanal und die zweite Schnellkupplung mit dem Rücklaufkanal verbunden wird. Diese Ausbildung kann dann von besonderem Vorteil sein, wenn der Druckentlastungsschalter außerhalb der Fahrzeugkabine in der Nähe des Anbaugeräts am Fahrzeug befestigt ist, um an Ort und Stelle die Montage und Demontage von Anbaugeräten vornehmen zu können. Von dieser Stelle aus lässt sich mit Hilfe der beschriebenen Weiterbildung eine hydraulische Einstellung oder Justage des Anbaugeräts sofort vornehmen, ohne zuvor die Fahrzeugkabine zu besteigen.

Um eine Fehlbedienung bei abgestelltem Fahrzeug zu vermeiden und Sicherheitsanforderungen zu genügen, kann es vorteilhaft sein, Mittel vorzusehen, durch die der elektrische Kreis, in dem der Druckentlastungsschalter und das Steuerventil liegt, nur dann mit der Spannungsquelle verbunden ist, wenn sich das Zündschloss des Arbeitsfahrzeugs in Zündstellung befindet. Beispielsweise kann ein Relais vorgesehen sein, dessen Schaltkontakte die Fahrzeugbatterie mit dem Druckentlastungsschalter verbinden, und dessen Erregerspule im Zündkreis liegt.

Die Erfindung bezieht sich des weiteren auf ein Arbeitsfahrzeug, insbesondere auf einen Teleskoplader mit einem erfindungsgemäß ausgebildeten Schaltungskreis.

Bei einem Teleskoplader ist es von Vorteil, den Druckentlastungsschalter in einem seitlichen, vorderen Bereich an dem Teleskoparm zu montieren, so dass er sich in der Nähe der Anbaugeräteschnittstelle für das Anbaugerät befindet.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen erfindungsgemäßen elektro-hydraulischen Schaltungskreis und
- Fig. 2: den Teleskoparm eines Teleskopladers, der einen erfindungsgemäßen Schaltungskreis enthält.

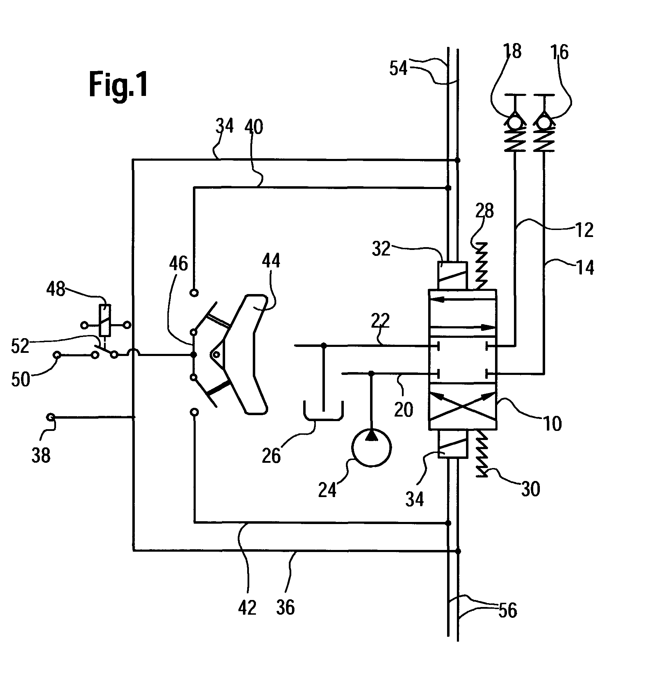

Der in Fig. 1 dargestellte elektro-hydraulische Schaltkreis ist auf einem Arbeitsfahrzeug, insbesondere einem Teleskoplader, angeordnet. Er enthält ein elektromagnetisch betätigbares, hydraulisches Steuerventil 10, welches 4 Wege und 3 Positionen aufweist. Die beiden rechten Wege des Steuerventils 10 stehen über je eine Hydraulikleitung 12, 14 mit einer Schnellkupplung 16, 18 in Verbindung. Durch die beiden Schnellkupplungen 16, 18 lässt sich der Schaltkreis mit hydraulischen Komponenten eines an das Arbeitsfahrzeug kuppelbaren Anbaugerätes verbinden, um die Komponenten mit Hydraulikflüssigkeit zu versorgen und die gewünschten Arbeitsfunktionen auszuführen.

Die beiden rechten Wege des Steuerventils 10 stehen zum einen mit einem Druckkanal 20 und zum anderen mit einem Rücklaufkanal 22 in Verbindung. Der Druckkanal 20 ist Teil des Fahrzeug-Hydraulikversorgungssystems, das durch eine Hydraulikpumpe 24 gespeist wird. Der Rücklaufkanal 22 ist an einen Vorratsbehälter 26 angeschlossen, der in der Regel drucklos ist.

In der dargestellten mittleren Position des Steuerventils 10 sind alle vier Wege gesperrt, so dass kein Druckausgleich zwischen den Schnellkupplungen 16, 18 und dem Druckkanal 20 bzw. dem Rücklaufkanal 22 erfolgen kann.

Wird der Steuerventilschieber nach unten verschoben, so verbindet er den Rücklaufkanal 22 mit der linken Schnellkupplung 18 und den Druckkanal 20 mit der rechten Schnellkupplung 16. Wird der Steuerventilschieber hingegen aus seiner mittleren Position nach oben verschoben, so verbindet das Steuerventil 10 den Rücklaufkanal 22 mit der rechten Schnellkupplung 16 und den Druckkanal 20 mit der linken Schnellkupplung 18.

Der Steuerventilschieber wird durch zwei Zentrierfedern 28, 30 in seine mittlere Position gedrängt. Durch zwei elektromagnetische Stellglieder 32, 34 lässt sich der Steuerventilschieber gegen die Kraft der Zentrierfedern 28, 30 entweder in die obere oder in die untere Position bewegen. Ein erster elektrischer Anschluss der Stellglieder 30, 32 steht über elektrische Verbindungsleitungen 34, 36 mit einem ersten Pol 38 einer nicht näher dargestellten Fahrzeugbatterie in Verbindung. Ein zweiter elektrischer Anschluss jedes Stellglieds 30, 32 ist über eine zugehörige elektrische Leitung 40, 42 mit einem von Hand betätigbaren Wippschalter 44 verbunden, der eine federzentrierte Ruhestellung und zwei Auslenkstellungen aufweist.

Der Mittelabgriff 46 des Wippschalters 44 ist über ein Relais 48 mit einem zweiten Pol 50 der Fahrzeugbatterie verbunden. Das Relais 48 ist in den nicht näher dargestellten Zündkreis des Fahrzeugs derart eingebunden, dass seine Kontaktstelle 52 nur dann geschlossen wird, wenn sich der Zündschlossschalter in Zündstellung befindet.

In der Ruhestellung des Wippschalters 44 bleiben die beiden zweiten elektrischen Anschlüsse der Stellglieder 32, 44 frei, so dass kein elektrischer Kreis geschlossen wird und auf den Steuerventilschieber keine Kräfte ausgeübt werden, die diesen aus seiner dargestellten mittleren Schließstellung drängen. Wird der Wippschalter 44 per Hand betätigt und in eine seiner beiden Auslenkstellungen gebracht, so verbindet der Wippschalter 44 bei geschlossener Kontaktstelle 52 des Relais 48 den zweiten Pol 50 über die entsprechende elektrische Leitung 40 bzw. 42 mit einem der Stellglieder 32, 34, welche den Steuerventilschieber nach oben bzw. nach unten verschieben, so dass ein Druckausgleich zwischen den Schnellkupplungen 16, 18 und dem Druckkanal 20 bzw. dem Rücklaufkanal 22 ermöglicht wird.

Der dargestellte Schaltungskreis ist nur dann funktionsfähig, wenn die Kontaktstelle 52 des Relais 48 geschlossen ist, wobei der zweite Pol 50 mit dem Mittelabgriff 46 des Wippschalters 44 verbunden ist. Dies ist nur dann der Fall, wenn das Zündschloss in seiner Zündstellung steht.

Die Funktionsweise des dargestellten Schaltkreise ist folgende:

Bevor die Bedienungsperson die Schnellkupplungen 16, 18 mit dem hydraulischen Kreis eines Anbaugeräts verbinden oder von diesem trennen kann, müssen die zu den Schnellkupplungen 16, 18 führenden Hydraulikleitungen 12, 14 drucklos gemacht werden. Die Bedienungsperson bringt das Zündschloss des Arbeitsfahrzeugs in seine Zündstellung, jedoch ohne den Fahrzeugmotor zu starten. In dieser Stellung wird die Hydraulikpumpe 24 nicht angetrieben und setzt den Druckkanal 20 nicht unter Hydraulikdruck. Die Bedienungsperson bringt nun den Wippschalter 44 beispielsweise in seine obere Auslenkstellung, so dass er die elektrische Leitung 40 mit dem zweiten Pol 50 verbindet und das obere Stellglied 32 erregt, welches den Steuerventilschieber in die obere Stellung bringt. In dieser Stellung wird die linke Schnellkupplung 18 mit dem drucklosen Rücklaufkanal 22 verbunden und druckentlastet, so dass sie sich lösen lässt. Die Bedienungsperson bringt nun den Wippschalter 44 in seine andere, z. B. untere Auslenkstellung, so dass der Wippschalter 44 die elektrische Leitung 42 mit dem zweiten Pol 50 verbindet und das untere Stellglied 34 erregt, welches den Steuerventilschieber in die untere Stellung bringt. In dieser Stellung wird die rechte Schnellkupplung 16 mit dem drucklosen Rücklaufkanal 22 verbunden und druckentlastet, so dass auch diese sich lösen lässt.

Falls in dem Druckkanal 20 kein Restdruck herrscht, können schon durch eine einseitige Betätigung des Wippschalters 44 beide Schnellkupplungen 16, 18 druckentlastet werden.

Bei laufendem Fahrzeugmotor und angetriebener Hydraulikpumpe 24 steht die Druckleitung unter Druck. Hierbei ermöglicht es der dargestellte Schaltungskreis, mit Hilfe des Wippschalters 44 die Hydraulikfunktion des Anbaugerätes zu steuern. Wird der Wippschalter 44 in eine Auslenkung gebracht, so verschiebt sich der Steuerventilschieber in eine Richtung aus seiner Ruhelage und verbindet eine Schnellkupplung 16, 18 mit dem Druckkanal 20, der den Systemdruck bereitstellt, und die andere Schnellkupplung 16, 18 mit dem Rücklaufkanal 22, der einen Flüssigkeitsrückfluss ermöglicht. Wird der Wippschalter 44 in seine andere Auslenkstellung gebracht, so wird jeweils die andere Schnellkupplung an den Systemdruck bzw. an den Rückflusskanal angeschlossen.

Neben der Einbindung in den dargestellten Schaltungskreis können die Stellglieder 32, 34 des Steuerventils 10 auch der betriebsmäßigen Steuerung des Zuflusses und Abflusses der Hydraulikflüssigkeit, die über die Schnellkupplungen zu dem Anbaugerät geleitet wird, dienen. Zu diesem Zweck sind an die Stellglieder 32, 34 elektrische Steuerleitungen 54, 56 angeschlossen, die mit einem entsprechenden, nicht näher dargestellten Steuerkreis verbunden sind. Die betriebsmäßige Steuerung des Steuerventils 10 kann beispielsweise durch einen in der Fahrzeugkabine angeordneten Joystick erfolgen.

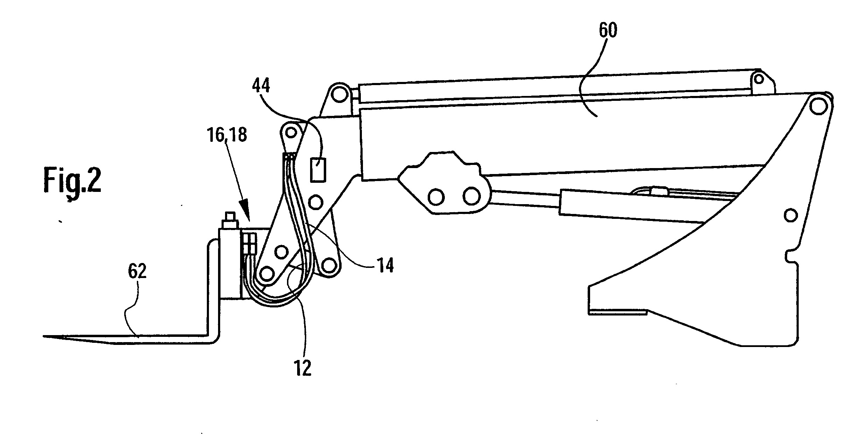

Aus Fig. 2 geht die Seitenansicht eines Teleskoparms 60 hervor, der Teil eines nicht näher dargestellten Teleskopladers ist. Im vorderen Bereich des Teleskoparms 60 befindet sich eine Anbauschnittstelle, an ,der ein als hydraulisch betätigbare Gabel 62 ausgebildetes Anbaugerät befestigt ist. Über ein in Fig. 2 nicht sichtbares Steuerventil 10, zwei Hydraulikleitungen 12, 14 und zwei Schnellkupplungen 16, 18 ist die Gabel 62 an den Hydraulikkreis des Teleskopladers angeschlossen. Im vorderen Bereich des Teleskoparms 60, in der Nähe der Anbauschnittstelle ist der Wippschalter 44 montiert. Diese räumliche Nähe erleichtert der Bedienungsperson die Montage und Demontage des Anbaugeräts, weil sie vor Ort die Druckentlastung der Schnellkupplungen 16, 18 vornehmen kann und nicht erst die Fahrzeugkabine besteigen muss.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die in dem Schutzbereich der Patentansprüche fallen.

## Patentansprüche

1. Elektro-hydraulischer Schaltungskreis zur Druckentlastung eines Schnellkupplungskreises mit wenigstens zwei hydraulischen Schnellkupplungen (16, 18), durch welche hydraulische Komponenten eines Anbaugerätes (62) mit dem Hydraulikversorgungskreis eines Arbeitsfahrzeugs lösbar verbindbar sind, wobei die Schnellkupplungen (16, 18) über Hydraulikleitungen (12, 14) unter Zwischenschaltung wenigstens eines elektromagnetisch ansteuerbaren Steuerventils (10) wahlweise mit einem fahrzeugseitigen Druckkanal (20) oder mit einem fahrzeugseitigen Rücklaufkanal (22) verbindbar sind, wobei wenigstens ein von Hand betätigbarer, elektrischer Druckentlastungsschalter (44) vorgesehen ist, der mit einer Spannungsquelle und dem wenigstens einen Steuerventil (10) derart in Verbindung steht, dass bei einer Schalterbetätigung das Steuerventil (10) aus einer Sperrstellung in eine Durchflussstellung, in der wenigstens eine Schnellkupplung (16, 18) mit dem Rücklaufkanal (22) verbunden wird, umschaltet, **dadurch gekennzeichnet, dass** das Steuerventil (10) in einen elektrischen Steuerkreis zur betriebsmäßigen Steuerung des Zuflusses und Abflusses der Hydraulikflüssigkeit zu dem Anbaugerät (62) eingebunden ist.

2. Schaltungskreis nach Anspruch 1, **dadurch gekennzeichnet, dass** der Druckentlastungsschalter ein Wippschalter (44) ist, der aus einer Ruhestellung in wenigstens zwei unterschiedliche Wippstellungen auslenkbar ist, um wahlweise eine der Schnellkupplungen (16, 18) mit dem Rücklaufkanal (22) zu verbinden.

3. Schaltungskreis nach Anspruch 1 oder 2, **dadurch gekennzeichnet, dass** das Steuerventil (10) zwischen wenigstens drei Stellungen bewegbar ist, wobei in einer ersten Stellung, eine erste Schnellkupplung (16, 18) mit dem Rückflusskanal (22) verbunden wird, eine zweite Stellung eine Sperrstellung ist und in einer dritten Stellung eine zweite Schnellkupplung (16, 18) mit dem Rückflusskanal (22) verbunden wird.

4. Schaltungskreis nach Anspruch 3, **dadurch gekennzeichnet, dass** zusätzlich in der ersten Stellung des Steuerventils (10) die zweite Schnellkupplung (16, 18) mit dem Druckkanal (20) verbunden wird und in der dritten Stellung des Steuerventils (10) die erste Schnellkupplung (16, 18) mit dem Druckkanal (20) verbunden wird.

5. Schaltungskreis nach einem der Ansprüche 1 bis 4, **dadurch gekennzeichnet, dass** Mittel (48, 52) vorgesehen sind, durch die der elektrische Kreis mit Druckentlastungsschalter (44) und Steuerventil (10) nur dann mit der Spannungsquelle verbunden ist, wenn das Zündschloss des Arbeitsfahrzeugs auf Zündstellung steht.

6. Schaltungskreislauf nach einem der Ansprüche 1 bis 5, **dadurch gekennzeichnet, dass** der Druckentlastungsschalter (44) in der Nähe des Anbaugerätes (62) außen am Fahrzeug montierbar ist.

7. Arbeitsfahrzeug mit einem Schaltungskreis nach einem der Ansprüche 1 bis 6.

8. Teleskoplader mit einem Schaltungskreis nach einem der Ansprüche 1 bis 6.

9. Teleskoplader nach Anspruch 8, **dadurch gekennzeichnet, dass** der Druckentlastungsschalter (44) in einem seitlichen, vorderen Bereich an dem Teleskoparm (60) montierbar ist.

## Claims

1. Electrohydraulic circuit for relieving the pressure of a quick-connect coupling circuit with at least two hydraulic quick-connect couplings (16, 18), through which hydraulic components of an attachment unit (62) can be releasably connected to the hydraulic supply circuit of a work vehicle, wherein the quick-connect couplings (16, 18) can be selectively connected via hydraulic lines (12, 14), with at least one electromagnetically activated control valve (10) interposed, to a pressure duct (20) on the vehicle side or to a return duct (22) on the vehicle side, wherein at least on hand-operated electrical pressure relief switch (44) is provided, which connects with a voltage source and the at least one control valve (10) in such a way that when the switch is operated, the control valve (10) is switched over from a blocking position into a flow position, in which at least one quick-connect coupling (16, 18) is connected to the return duct (22), **characterised in that** the control valve (10) is integrated into an electrical control circuit to operatively control the supply and discharge of hydraulic fluid to the attachment unit (62).

2. Circuit according to Claim 1, **characterised in that** the pressure relief switch is a rocker switch (44), which can be shifted out of a resting position into at least two different tilt positions in order to selectively connect one of the quick-connect couplings (16, 18) to the return duct (22).

3. Circuit according to Claim 1 or 2, **characterised in that** the control valve (10) is movable between at least three positions, wherein in a first position a first quick-connect coupling (16, 18) is connected to the return duct (22), a second position is a blocking position and in a third position a second quick-connect coupling (16, 18) is connected to the return duct (22).

4. Circuit according to Claim 3, **characterised in that** in addition, in the first position of the control valve (10) the second quick-connect coupling (16, 18) is connected to the pressure duct (20) and in the third position of the control valve (10) the first quick-connect coupling (16, 18) is connected to the pressure duct (20).

5. Circuit according to one of Claims 1 to 4, **characterised in that** means (48, 52) are provided, through which the electrical circuit with the pressure relief switch (44) and control valve (10) is only connected to the voltage source when the ignition lock of the work vehicle is in ignition position.

6. Circuit according to one of Claims 1 to 5, **characterised in that** the pressure relief switch (44) can be mounted on the outside of the vehicle in the vicinity of the attachment unit (62).

7. Work vehicle with a circuit according to one of Claims 1 to 6.

8. Telescopic loader with a circuit according to one of Claims 1 to 6.

9. Telescopic loader according to Claim 8, **characterised in that** the pressure relief switch (44) can be mounted on the telescoping arm (60) in a lateral front region.

## Revendications

1. Circuit électrohydraulique pour la décompression d'un circuit de raccord rapide comprenant au moins deux raccords rapides (16, 18) hydrauliques, par lesquels des composants hydrauliques d'un appareil rapporté (62) peuvent être reliés de façon amovible au circuit d'alimentation hydraulique d'un véhicule de travail, les raccords rapides (16, 18) pouvant être reliés par des conduites hydrauliques (12, 14) avec l'intercalation d'au moins une soupape de commande (10) pouvant être actionnée de façon électromagnétique au choix avec un canal de pression (20) côté véhicule ou avec un canal de retour (22) côté véhicule, moyennant quoi il est prévu au moins un interrupteur de décompression (44) électrique et pouvant être actionné manuellement, qui est en liaison avec une source de tension et au moins une soupape de commande (10) de telle sorte que, lors d'un actionnement de l'interrupteur, la soupape de commande (10) commute d'une position de blocage dans une position d'écoulement, dans laquelle au moins un raccord rapide (16, 18) est relié au canal de retour (22), **caractérisé en ce que** la soupape de commande (10) est intégrée dans un circuit électrique pour la commande en cours de service de l'arrivée et du départ du liquide hydraulique en direction de l'appareil rapporté (62).

2. Circuit selon la revendication 1, **caractérisé en ce que** l'interrupteur de décompression est un interrupteur à bascule (44), qui peut être dévié d'une position de repos dans au moins deux positions de bascule différentes, afin de relier au choix l'un des raccords rapides (16, 18) avec le canal de retour (22).

3. Circuit selon la revendication 1 ou 2, **caractérisé en ce que** la soupape de commande (10) peut être déplacée entre au moins trois positions, un premier raccord rapide (16, 18) étant relié au canal de retour (22) dans une première position, une seconde position étant une position de blocage et un second raccord rapide (16, 18) étant relié au canal de retour (22) dans une troisième position.

4. Circuit selon la revendication 3, **caractérisé en ce que**, en supplément, dans la première position de la soupape de commande (10), le second raccord rapide (16, 18) est relié au canal de pression (20) et, dans la troisième position de la soupape de commande (10), le premier raccord rapide (16, 18) est relié au canal de pression (20).

5. Circuit selon l'une quelconque des revendications 1 à 4, **caractérisé en ce que** des moyens (48, 52) sont prévus, par lesquels le circuit électrique avec l'interrupteur de décompression (44) et la soupape de commande (10) est relié à la source de tension seulement dans les cas où la clé de contact du véhicule de travail est sur la position d'allumage.

6. Circuit selon l'une quelconque des revendications 1 à 5, **caractérisé en ce que** l'interrupteur de décompression (44) peut être monté à proximité de l'appareil rapporté (62) à l'extérieur sur le véhicule.

7. Véhicule de travail comprenant un circuit selon l'une quelconque des revendications 1 à 6.

8. Chargeur télescopique avec un circuit selon l'une quelconque des revendications 1 à 6.

9. Chargeur télescopique selon la revendication 8, **caractérisé en ce que** l'interrupteur de décompression (44) peut être monté dans une zone avant et latérale sur le bras télescopique (60).
